# EUROPÄISCHE PATENTANMELDUNG

(11) **EP 1 460 417 A1**
(43) Veröffentlichungstag der Anmeldung: **22.09.2004**
(21) Anmeldenummer: 04100855.8
(22) Anmeldetag: 03.03.2004
(51) Int. Cl.: G01N 27/417

(54) **Verfahren zum Betrieb einer Messsonde zur Messung einer Gaskonzentration**

(30) Priorität: 21.03.2003 DE 10312732
(71) Anmelder: SIEMENS AKTIENGESELLSCHAFT, 80333 München (DE); DaimlerChrysler AG, 70567 Stuttgart (DE)
(72) Erfinder: Bausewein, Andreas, 85416, Langenbach (DE); Schifferl, Ludwig, 93080, Pentling (DE); Busch, Michael, 73061, Ebersbach (DE)

(57) **Zusammenfassung**

Bei einem Verfahren zum Betrieb einer Messsonde (10) zur Messung einer Gaskonzentration in einem Messgas mit einem sauerstoffionenleitenden Festelektrolyten, der eine Messkavität (24) zur Aufnahme des Messgases, eine Messelektrode (30) und eine Außenelektrode (28) aufweist, wobei ein zwischen Messelektrode (30) und Außenelektrode (28) fließender Pumpstrom Sauerstoffionen von der Messelektrode (30) zur Außenelektrode (28) transportiert, wird eine Überprüfung der Messelektrode (30) durch eine Bestimmung der effektiv für die Sauerstoffdiffusion zur Verfügung stehenden Elektrodenfläche durchgeführt.

## Beschreibung

Die Erfindung betrifft ein Verfahren zum Betrieb einer Messsonde zur Messung einer Gaskonzentration in einem Messgas mit einem sauerstoffionenleitenden Festelektrolyten, der eine Messkavität zur Aufnahme des Messgases, eine Messelektrode und eine Außenelektrode aufweist, wobei ein zwischen Messelektrode und Außenelektrode fließender Pumpstrom Sauerstoffionen von der Messelektrode zur Außenelektrode transportiert.

Es ist bekannt, zur Messung der NOx Konzentration in einem Messgas, etwa dem Abgas einer Brennkraftmaschine, einen Sensor zu verwenden, wie er beispielsweise in der Druckschrift DE 199 07 947 A1 beschrieben ist. Die Funktionsweise des Sensors basiert auf dem Nernst-Prinzip. Das Festelektrolytmaterial des Sensors ist bei Temperaturen oberhalb von 350 °C gleichzeitig ein sehr guter Sauerstoffionenleiter und ein schlechter Ionenleiter bezüglich anderer chemischer Elemente.

Verschiedene Sauerstoffkonzentrationen auf beiden Seiten des Festelektrolyten führen zu unterschiedlichen elektrischen Potentialen der an den jeweiligen Seiten angeordneten Elektroden. Die Potentialdifferenz stellt dann ein Maß für den Unterschied in der Sauerstoffkonzentration auf beiden Seiten des Festelektrolyts dar.

Die Menge an verbleibendem Sauerstoff im Abgas schwankt mit einer Änderung des Luft-Kraftstoffverhältnisses, dem Lambdawert stark. Liegt das Luft-Kraftstoff-Gemisch im so genannten fetten Bereich (Lambdawert < 1) in dem Kraftstoff im stöchiometrischen Überschuss vorliegt, ergibt sich typischerweise eine Nernstspannung zwischen den beiden Elektroden von 800 bis 1000 mV. Für so genannte magere Gemische (Lambdawert > 1), bei denen der Sauerstoff der Luft überwiegt, ergeben sich Nernstspannung bis herab zu etwa 100 mV. Beim Übergang von fettem zu magerem Gemisch ändert sich die Nernstspannung somit im Bereich um den stöchiometrischen Lambdawert 1 sprunghaft um 700 bis 800 mV.

Der Messaufnehmer der oben genannten DE 199 07 947 A1 weist zwei Messzellen in einem Körper aus einem sauerstoffleitenden Festelektrolyten auf. Aus der ersten Messzelle, der das Messgas über eine Diffusionsbarriere zugeführt wird, wird mittels eines ersten Pumpstroms Sauerstoff abgepumpt und damit eine erste Sauerstoffkonzentration eingestellt.

Das Messgas diffundiert über eine Diffusionsbarriere von der ersten Messzelle in die zweite Messzelle. Dort wird der Sauerstoffgehalt mittels eines zweiten Pumpstroms weiter abgesenkt und eine Sauerstoffkonzentration eingestellt. An einer in der zweiten Messzelle angeordneten Messelektrode wird NOx zersetzt und der dabei gebildete Sauerstoff mittels eines dritten Pumpstroms abgepumpt. Der dritte Pumpstrom stellt dann ein Maß für die NOx Konzentration in dem Messgas dar.

Zur Einstellung der Pumpströme wird in den jeweiligen Messzellen das Nernstpotential an den Elektroden abgegriffen, das relativ zu dem Sauerstoffgehalt eines Referenzgases, dem eine Referenzelektrode ausgesetzt ist, bestimmt wird.

Je nach Oxidationsneigung des Elektrodenmaterials infolge von Reglerschwächen oder Fertigungsschwankungen bzw. Materialstreuungen kann es vorkommen, dass das Elektrodenmaterial mehr oder weniger stark oxidiert und durch die Einlagerung von Sauerstoff sein Volumen ändert. Die damit einhergehende Verfälschung des Messsignals kann dazu führen, dass die für Kraftfahrzeuge vorgeschriebenen Emissionswerte mit einem derartig veränderten Sensor nicht mehr erfüllt werden kann.

Hier setzt die Erfindung an, der die Aufgabe zugrunde liegt, ein gattungsgemäßes Verfahren so weiterzubilden, dass die Zuverlässigkeit der von der Messsonde bestimmten Messwerte erhöht wird.

Diese Aufgabe wird erfindungsgemäß dadurch gelöst, dass bei einem Verfahren der eingangs genannten Art eine Überprüfung der Integrität der Messelektrode durch eine Bestimmung der effektiv für die Sauerstoffdiffusion zur Verfügung stehenden Elektrodenfläche durchgeführt wird.

Die Erfindung beruht auf dem Gedanken, dass die verfälschten Messwerte von einer Ablösung des Elektrodenmaterials und/oder einer darüberliegenden Deckschicht aufgrund mechanischer Spannungen oder Oxidationsneigung des Materials herrühren. Die Ablösung wird erfindungsgemäß dadurch erfasst, dass die effektiv für die Sauerstoffdiffusion zur Verfügung stehende Elektrodenfläche ermittelt wird. Für diese Ermittlung werden im Folgenden eine Reihe bevorzugter Verfahren angegeben.

In einer ersten bevorzugten Ausgestaltung des erfindungsgemäßen Verfahrens wird die Überprüfung der Messelektrode ausgeführt, indem in der Messkavität eine vorbestimmte Sauerstoffkonzentration eingestellt wird, ein vorbestimmter konstanter Pumpstrom zwischen Messelektrode und Außenelektrode eingeprägt, das resultierende Nernstpotential an der Messelektrode gemessen wird, die Zeitdauer gemessen wird, bis das gemessene Nernstpotential von kleinen zu großen Werten springt, die gemessene Zeitdauer mit einem vorbestimmten Schwellenwert verglichen wird, und ein Defekt der Messelektrode erkannt wird, wenn die gemessene Zeitdauer den vorbestimmten Schwellenwert unterschreitet.

Zweckmäßig wird dabei der vorbestimmte konstante Pumpstrom so groß gewählt, dass auch bei einer intakten Messelektrode mehr Sauerstoff aus der Messelektrode zur Außenelektrode transportiert wird, als in die Messkavität nachdiffundieren kann.

Nach einer anderen bevorzugten Ausgestaltung des erfindungsgemäßen Verfahrens wird die Überprüfung der Messelektrode ausgeführt, indem ein vorbestimmter konstanter Pumpstrom zwischen Messelektrode und Außenelektrode eingeprägt wird, die Sauerstoffkonzentration in der Messkavität variiert, das resultierende Nernstpotential an der Messelektrode gemessen wird, die Sauerstoffkonzentration bestimmt wird, bei der das gemessene Nernstpotential zwischen kleinen und großen Werten springt, die bestimmte Sauerstoffkonzentration mit einem Referenzwert verglichen wird, und ein Defekt der Messelektrode erkannt wird, wenn die bestimmte Sauerstoffkonzentration von dem Referenzwert um mehr als einen vorbestimmten Betrag abweicht.

Die Sauerstoffkonzentration in der Messkavität wird dabei mit Vorteil bestimmt, indem das Nernstpotential an einer Hilfselektrode in der Messkavität gemessen wird.

Gemäß einer weiteren vorteilhaften Variante des erfindungsgemäßen Verfahrens wird die Überprüfung der Messelektrode ausgeführt, indem in der Messkavität eine vorbestimmte Sauerstoffkonzentration eingestellt wird, ein Pumpstrom zwischen Messelektrode und Außenelektrode eingeprägt wird, der so eingestellt wird, dass an der Messelektrode ein vorbestimmter Wert des Nernstpotentials anliegt, die Sauerstoffkonzentration in der Messkavität variiert und der Pumpstrom zwischen Messelektrode und Außenelektrode dabei so nachgeführt wird, dass das Nernstpotential an der Messelektrode konstant gehalten wird, der Proportionalitätsfaktor zwischen Pumpstrom und Sauerstoffkonzentration bestimmt wird, der bestimmte Proportionalitätsfaktor mit einem Referenzwert verglichen wird, und ein Defekt der Messelektrode erkannt wird, wenn der bestimmte Proportionalitätsfaktor von dem Referenzwert um mehr als einen vorbestimmten Betrag abweicht.

Bevorzugt werden bei der Durchführung zwei vorbestimmte Werte der Sauerstoffkonzentration in der Messkavität eingestellt, an denen jeweils der Pumpstrom so eingestellt wird, dass der vorbestimmte Wert des Nernstpotentials an der Messelektrode anliegt, und aus den beiden Werten für den eingestellten Pumpstrom wird der Proportionalitätsfaktor zwischen Pumpstrom und Sauerstoffkonzentration bestimmt. Da ein linearer Zusammenhang zwischen Pumpstrom und Sauerstoffkonzentration besteht, genügen zwei Messwerte zur Ermittlung des Proportionalitätsfaktors.

Eine Ablösung einer über der Messelektrode liegenden Deckschicht wird mit Vorteil daran erkannt, dass der bestimmte Proportionalitätsfaktor den Referenzwert um mehr als einen vorbestimmten Betrag überschreitet. Dagegen liegt in der Regel eine Ablösung von Deckschicht und Messelektrode vor, wenn der bestimmte Proportionalitätsfaktor den Referenzwert um mehr als einen vorbestimmten Betrag unterschreitet.

Nach noch einer weiteren vorteilhaften Variante des erfindungsgemäßen Verfahrens wird die Überprüfung der Messelektrode ausgeführt, indem in der Messkavität eine vorbestimmte Sauerstoffkonzentration eingestellt wird, ein Pumpstrom zwischen Messelektrode und Außenelektrode eingeprägt wird, der so eingestellt wird, dass an der Messelektrode ein vorbestimmter Wert des Nernstpotentials anliegt, der eingestellte Pumpstrom mit einem Referenzwert verglichen wird, und eine defekte Messelektrode erkannt wird, wenn der eingestellte Pumpstrom von dem Referenzwert um mehr als einen vorbestimmten Betrag abweicht.

Bei dieser Variante wird eine Ablösung nur der Deckschicht der Messelektrode detektiert, wenn der eingestellte Pumpstrom den Referenzwert um mehr als einen vorbestimmten Betrag überschreitet. Eine Ablösung von Deckschicht und Messelektrode zeigt sich daran, dass der eingestellte Pumpstrom den Referenzwert um mehr als einen vorbestimmten Betrag unterschreitet.

Die Überprüfung der Integrität der Messelektrode kann vorteilhaft bei jedem Start der Messsonde durchgeführt werden. Alternativ oder zusätzlich kann die Überprüfung der Messelektrode auf Anforderung, insbesondere durch ein Steuergerät durchgeführt werden.

Die Erfindung wird nachfolgend unter Bezugnahme auf die Zeichnungen beispielhaft noch näher erläutert. Dabei zeigt
Figur 1 eine schematische Schnittdarstellung eines NOx-Sensors mit zugehöriger Beschaltung und
Figur 2 ein Flussdiagramm zur Durchführung eines erfindungsgemäßen Betriebsverfahrens.

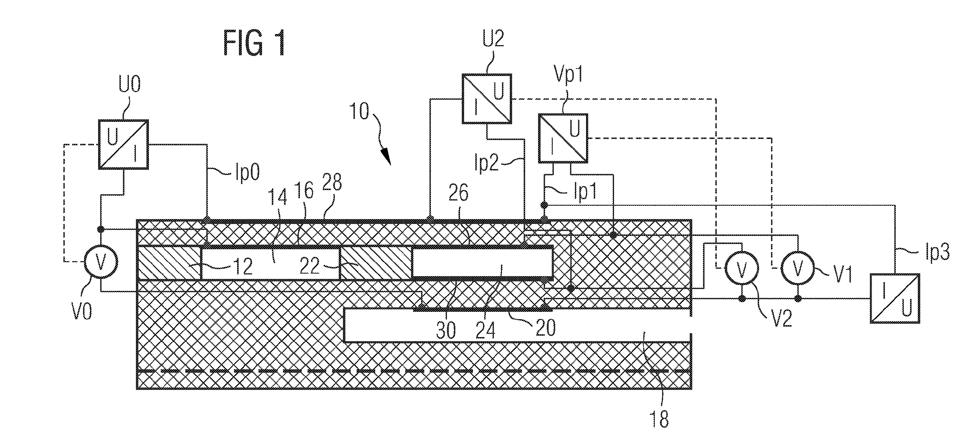

Figur 1 zeigt eine schematische Schnittdarstellung eines NOx-Sensors 10 zur Erfassung der NOx-Konzentration im Abgastrakt einer Brennkraftmaschine. Der NOx-Sensor 10 ist aus einem Festkörperelektrolyten, im Ausführungsbeispiel aus ZrO2 aufgebaut. Das zu messende Abgas diffundiert über eine Diffusionsbarriere 12 in eine erste Messzelle 14.

Der Sauerstoffgehalt der ersten Messzelle 14 wird in bekannter Weise durch Abgriff einer Nernstspannung V0 zwischen einer ersten Elektrode 16 in der Messzelle 14 und einer in einer Referenzzelle 18 angeordneten Referenzelektrode 20 gemessen. Der Sauerstoffgehalt in der ersten Messzelle 14 ist damit auf den Sauerstoffgehalt in der Referenzzelle 18 bezogen.

Die spannungsgesteuerte Stromquelle U0 regelt auf Grundlage des gemessenen Sauerstoffgehalts in der ersten Messzelle 14 durch einen ersten Pumpstrom Ip0 eine vorbestimmte Sauerstoffkonzentration in der ersten Messzelle 14 im Bereich einiger ppm ein.

Von der ersten Messzelle 14 diffundiert das Messgas über eine zweite Diffusionsbarriere 22 in eine zweite Messzelle 24. In der zweiten Messzelle 24 wird durch eine zweite spannungsgesteuerte Stromquelle U1 auf Grundlage einer zweiten Nernstspannung V1 zwischen einer zweiten Elektrode 26 und der Referenzelektrode 20 der Sauerstoffgehalt des Messgases auf Werte im Bereich einiger 10⁻³ ppm erniedrigt. Dazu treibt die Stromquelle U1 einen zweiten Pumpstrom Ip1 zwischen der zweiten Elektrode 26 und einer Außenelektrode 28.

NOx wird nun an einer Messelektrode 30 in der zweiten Messzelle 24 katalytisch zersetzt und der entstehende Sauerstoff über einen dritten Pumpstrom Ip2 von der Messelektrode 30 zur Außenelektrode 28 transportiert. Der Sauerstoffgehalt in der zweiten Messzelle 24 ist durch den zweiten Pumpstrom Ip1 so weit abgesenkt, dass der dritte Pumpstrom Ip2 im Wesentlichen nur von den Sauerstoffionen getragen wird, die aus der Zersetzung von NOx an der Messelektrode 30 stammen. Der dritte Pumpstrom Ip2 ist somit ein Maß für die NOx-Konzentration in der zweiten Messzelle 24 und damit auch in dem zu messenden Abgas.

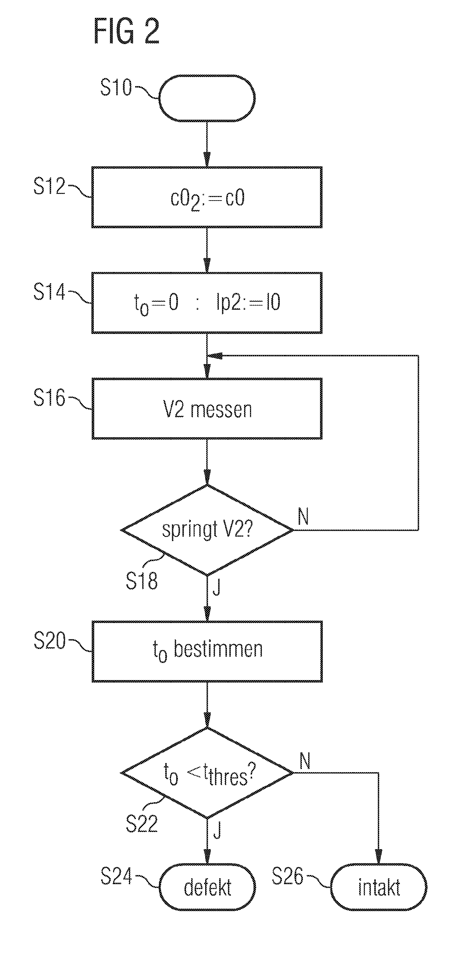

Figur 2 zeigt ein Flussdiagramm zur Durchführung eines erfindungsgemäßen Betriebsverfahrens, bei dem die Integrität der Messelektrode 30, beispielsweise auf Anforderung durch ein Steuergerät, geprüft wird.

Dazu wird nach einem Schritt S10, in dem das Verfahren gestartet wird, in einem Schritt S12 zunächst eine vorbestimmte Sauerstoffkonzentration in der zweiten Messzelle 24 eingestellt, die sich bei zunächst abgeschaltetem dritten Pumpstrom Ip2 sich auch in der Messelektrode 30 einstellt. Die Sauerstoffkonzentration ist dabei so groß gewählt, im Ausführungsbeispiel 2500 ppm, dass eine möglicherweise vorhandene NOx-Konzentration, etwa 500 ppm, im Vergleich dazu hinsichtlich des Gehalts an Sauerstoffatomen vernachlässigbar ist.

Dann wird in einem Schritt S14 zu einem Zeitpunkt t0=0 ein vorbestimmter konstanter Pumpstrom Ip2=I0 zwischen Messelektrode 30 und Außenelektrode 28 getrieben und in Schritt S16 das resultierende Nernstpotential V2 an der Messelektrode 30 gemessen. Die beginnende Pumptätigkeit entfernt Sauerstoff aus der Elektrode 30, wobei auch Sauerstoff aus dem Gasraum über einer Deckschicht der Messelektrode 30 durch die diffusionsbegrenzende Deckschicht in die Messelektrode 30 nachdiffundiert.

In einem Schritt S18 wird nun überprüft, ob das gemessene Nernstpotential V2 von kleinen zu großen Werten springt und in Schritt S20 die Zeitdauer t0 bis zu diesem Sprung bestimmt. In einem Schritt S22 wird dann die so bestimmte Zeitdauer t0 mit einem vorbestimmten Schwellenwert t_thres verglichen. Bei einer durch Elektrodenablösung verringerten effektiven Grenzschicht, also einer verkleinerten Schnittstelle Gasphase - Elektrodenmaterial - Festelektrolyt, verringert sich mit der Kontaktfläche zum Elektrolytmaterial auch das Volumen der Messelektrode 30. Damit ist auch die Sauerstoffmenge innerhalb der Messelektrode 30 geringer und kann mit einem konstanten Pumpstrom Ip2 schneller abgepumpt werden, als bei größerer Elektrodenfläche.

Es versteht sich, dass der Pumpstrom Ip2 so groß gewählt wird, dass auch bei einer intakten Messelektrode mehr Sauerstoff entfernt wird, als nachdiffundieren kann.

Die Sauerstoffmenge innerhalb der Messelektrode 30 benötigt eine definierte Ladungsmenge beim Transport als Sauerstoffionen durch den Festelektrolyten, die dem Integral über Ip2*dt, also bei konstantem Strom dem Wert 10*t0 entspricht. Eine vollständige Entfernung des Sauerstoffs aus der Messelektrode 30 wird über das Nernstpotential V2 erfasst, das dann schlagartig von kleinen Werten, im Ausführungsbeispiel etwa 100 mV zu großen Werten, im Ausführungsbeispiel etwa 800 bis 1000 mV springt. Ist nun die Elektrodenfläche wegen einer Elektrodenablösung verkleinert, die Messelektrode also nicht mehr intakt, so wird t0 bei konstantem Pumpstrom 10 unter einem vorbestimmten Schwellenwert t_thres liegen, der zuvor als Grenzwert für die Erkennung einer fehlerhaften Elektrode ermittelt wurde.

Demgemäß wird einem Schritt S24 ein Defekt der Messelektrode erkannt, wenn die gemessene Zeitdauer t0 den vorbestimmten Schwellenwert t_thres unterschreitet. Andernfalls wird in Schritt S26 die Elektrode als intakt bewertet.

Nach einem anderen Ausführungsbeispiel des Betriebsverfahrens wird alternativ zum Ansatz, den zweiten Pumpstrom Ip2 zu einem bestimmten Zeitpunkt einzuschalten und die Zeitdauer bis zum Sprung des Nernstpotential zu bestimmen, nun die Sauerstoffkonzentration in der zweiten Messzelle 24 bei konstantem Pumpstrom Ip2 variiert. Stimmt man nun die Sauerstoffkonzentration durch, so folgt Ip2 der äußeren Sauerstoffkonzentration. Da die Menge an Sauerstoff, die bei einer verkleinerten effektiven Oberfläche der Messelektrode nachdiffundieren kann, geringer ist als bei einer intakten Elektrode, springt das Nernstpotential V2 bereits bei einer höheren Sauerstoffkonzentration als bei einer intakten Elektrode. Die Sauerstoffkonzentration in der zweiten Messzelle 24 wird im Ausführungsbeispiel über das Nernstpotential V1 der zweiten Elektrode 26 gemessen, so dass bei einer fehlerhaften Elektrode 30 der Sprungpunkt des Nernstpotentials V2 bei einem vom Referenzwert verschiedenen Wert des Nernstpotential V1 liegt. Es versteht sich, dass ein Defekt erst bei Überschreiten einer festgelegten erlaubten Abweichung vom Referenzwert diagnostiziert wird.

In einem weiteren Ausführungsbeispiel des erfindungsgemäßen Betriebsverfahrens wird die Sauerstoffkonzentration in der zweiten Messzelle 24 auf einen vorbestimmten Wert eingestellt, während der Pumpstrom Ip2 so geregelt wird, dass an der Messelektrode 30 ein vorbestimmter Wert des Nernstpotentials anliegt. Wird nun die Sauerstoffkonzentration in der zweiten Messzelle 24 durchgestimmt und Ip2 dabei so nachgeführt, dass das Nernstpotential an der Messelektrode konstant bleibt, so folgt Ip2 der äußeren Sauerstoffkonzentration. Da die Menge an Sauerstoff, die bei einer verkleinerten effektiven Oberfläche der Messelektrode nachdiffundieren kann, geringer als bei einer intakten Elektrode ist, stellt sich bei einer verringerten Elektrodenfläche ein kleinerer Proportionalitätsfaktor von Ip2 zur Sauerstoffkonzentration in der zweiten Messzelle 24 ein, als bei der intakten Messelektrode 30.

Aufgrund des linearer Zusammenhang zwischen Pumpstrom Ip2 und Sauerstoffkonzentration genügen zwei Messpunkte zur Ermittlung des Proportionalitätsfaktors. Ist nur die Deckschicht der Messelektrode durch einen Riss abgelöst, so ergibt sich weitgehend unabhängig von der Rissgröße ein deutlich größerer Proportionalitätsfaktor (im Ausführungsbeispiel etwa doppelt so groß) als bei einer intakten Elektrode. Sind dagegen Deckschicht und Messelektrode gemeinsam abgelöst, so zeigt sich wegen der geringeren Fläche der Messelektrode 30 ein kleinerer Proportionalitätsfaktor, sowie ein Offset in der Strom-Konzentrations-Beziehung, der von der brüchigen Deckschicht herrührt.

Die Bestimmung der Integrität der Messelektrode 30 kann auch mit einer Messung bei nur einer einzigen Sauerstoffkonzentration durchgeführt werden. Dazu wird eine erhöhte Sauerstoffkonzentration, im Ausführungsbeispiel 500 ppm bis 750 ppm, eingestellt und der Pumpstrom Ip2 gemessen, der zum Erreichen eines vorbestimmten Nernstpotentials erforderlich ist. Bei einer intakten Elektrode 30 ergibt sich ein mittlerer Wert, der als Referenzwert dient. Bei Ablösung nur der Deckschicht ergibt sich ein höherer, bei Ablösung von Deckschicht und Messelektrode ein niedriger Stromwert. Beispielsweise kann bei einer Überschreitung des Referenzwerts um 30% oder mehr auf eine Ablösung nur der Deckschicht, und bei einer Unterschreitung des Referenzwerts um 30% oder mehr eine Ablösung von Deckschicht und Messelektrode erkannt werden.

## Patentansprüche

1. Verfahren zum Betrieb einer Messsonde zur Messung einer Gaskonzentration in einem Messgas mit einem sauerstoffionenleitenden Festelektrolyten, der eine Messkavität zur Aufnahme des Messgases, eine Messelektrode und eine Außenelektrode aufweist, wobei ein zwischen Messelektrode und Außenelektrode fließender Pumpstrom Sauerstoffionen von der Messelektrode zur Außenelektrode transportiert, **dadurch gekennzeichnet, dass** eine Überprüfung der Messelektrode durch eine Bestimmung der effektiv für die Sauerstoffdiffusion zur Verfügung stehenden Elektrodenfläche oder eines davon abhängigen Wertes durchgeführt wird.

2. Verfahren nach Anspruch 1, **dadurch gekennzeichnet, dass** die Überprüfung der Messelektrode ausgeführt wird, indem
- in der Messkavität eine vorbestimmte Sauerstoffkonzentration eingestellt wird,
- ein vorbestimmter konstanter Pumpstrom zwischen Messelektrode und Außenelektrode eingeprägt und das resultierende Nernstpotential an der Messelektrode gemessen wird,
- die Zeitdauer gemessen wird, bis das gemessene Nernstpotential von kleinen zu großen Werten springt,
- die gemessene Zeitdauer mit einem vorbestimmten Schwellenwert verglichen wird, und
- ein Defekt der Messelektrode festgestellt wird, wenn die gemessene Zeitdauer den vorbestimmten Schwellenwert unterschreitet.

3. Verfahren nach Anspruch 2, **dadurch gekennzeichnet, dass** der vorbestimmte konstante Pumpstrom so groß gewählt wird, dass auch bei einer intakten Messelektrode mehr Sauerstoff aus der Messelektrode zur Außenelektrode transportiert wird, als in die Messelektrode nachdiffundieren kann.

4. Verfahren nach Anspruch 1, **dadurch gekennzeichnet, dass** die Überprüfung der Messelektrode ausgeführt wird, indem
- ein vorbestimmter konstanter Pumpstrom zwischen Messelektrode und Außenelektrode eingeprägt wird,
- die Sauerstoffkonzentration in der Messkavität variiert und das resultierende Nernstpotential an der Messelektrode gemessen wird,
- die Sauerstoffkonzentration bestimmt wird, bei der das gemessene Nernstpotential zwischen kleinen und großen Werten springt,
- die bestimmte Sauerstoffkonzentration mit einem Referenzwert verglichen wird, und
- ein Defekt der Messelektrode festgestellt wird, wenn die bestimmte Sauerstoffkonzentration von dem Referenzwert um mehr als einen vorbestimmten Betrag abweicht.

5. Verfahren nach Anspruch 4, **dadurch gekennzeichnet, dass** die Sauerstoffkonzentration in der Messkavität bestimmt wird, indem das Nernstpotential an einer Hilfselektrode in der Messkavität gemessen wird.

6. Verfahren nach Anspruch 1, **dadurch gekennzeichnet, dass** die Überprüfung der Messelektrode ausgeführt wird, indem
- in der Messkavität eine vorbestimmte Sauerstoffkonzentration eingestellt wird,
- ein Pumpstrom zwischen Messelektrode und Außenelektrode eingeprägt wird, der so eingestellt wird, dass an der Messelektrode ein vorbestimmter Wert des Nernstpotentials anliegt,
- die Sauerstoffkonzentration in der Messkavität variiert und der Pumpstrom zwischen Messelektrode und Außenelektrode dabei so nachgeführt wird, dass das Nernstpotential an der Messelektrode konstant gehalten wird,
- der Proportionalitätsfaktor zwischen Pumpstrom und Sauerstoffkonzentration bestimmt wird,
- der bestimmte Proportionalitätsfaktor mit einem Referenzwert verglichen wird, und
- ein Defekt der Messelektrode festgestellt wird, wenn der bestimmte Proportionalitätsfaktor von dem Referenzwert um mehr als einen vorbestimmten Betrag abweicht.

7. Verfahren nach Anspruch 6, **dadurch gekennzeichnet, dass** zwei vorbestimmte Werte der Sauerstoffkonzentration in der Messkavität eingestellt werden, an denen jeweils der Pumpstrom so eingestellt wird, dass der vorbestimmter Wert des Nernstpotentials an der Messelektrode anliegt, und aus den beiden Werten für den eingestellten Pumpstrom der Proportionalitätsfaktor zwischen Pumpstrom und Sauerstoffkonzentration bestimmt wird.

8. Verfahren nach Anspruch 6 oder 7, **dadurch gekennzeichnet, dass** eine Ablösung einer über der Messelektrode liegenden Deckschicht festgestellt wird, wenn der bestimmte Proportionalitätsfaktor den Referenzwert um mehr als einen vorbestimmten Betrag überschreitet.

9. Verfahren nach einem der Ansprüche 6 oder 7, **dadurch gekennzeichnet, dass** eine Ablösung einer über der Messelektrode liegenden Deckschicht und der Messelektrode festgestellt wird, wenn der bestimmte Proportionalitätsfaktor den Referenzwert um mehr als einen vorbestimmten Betrag unterschreitet.

10. Verfahren nach Anspruch 1, **dadurch gekennzeichnet, dass** die Überprüfung der Messelektrode ausgeführt wird, indem
- in der Messkavität eine vorbestimmte Sauerstoffkonzentration eingestellt wird,
- ein Pumpstrom zwischen Messelektrode und Außenelektrode eingeprägt wird, der so eingestellt wird, dass an der Messelektrode ein vorbestimmter Wert des Nernstpotentials anliegt,
- der eingestellte Pumpstrom mit einem Referenzwert verglichen wird, und
- ein Defekt der Messelektrode festgestellt wird, wenn der eingestellte Pumpstrom von dem Referenzwert um mehr als einen vorbestimmten Betrag abweicht.

11. Verfahren nach Anspruch 10, **dadurch gekennzeichnet, dass** eine Ablösung nur einer über der Messelektrode liegenden Deckschicht erkannt wird, wenn der eingestellte Pumpstrom den Referenzwert um mehr als einen vorbestimmten Betrag überschreitet.

12. Verfahren nach Anspruch 10, **dadurch gekennzeichnet, dass** eine Ablösung einer über der Messelektrode liegenden Deckschicht und der Messelektrode festgestellt wird, wenn der eingestellte Pumpstrom den Referenzwert um mehr als einen vorbestimmten Betrag unterschreitet.

13. Verfahren nach einem der vorhergehenden Ansprüche, **dadurch gekennzeichnet, dass** die Überprüfung der Messelektrode bei jedem Start des Betriebs der Messsonde durchgeführt wird.

14. Verfahren nach einem der vorhergehenden Ansprüche, **dadurch gekennzeichnet, dass** die Überprüfung der Messelektrode auf Anforderung, insbesondere durch ein Steuergerät durchgeführt wird.
